(19) Europäisches Patentamt
European Patent Office
Office européen des brevets

(11) **EP 4 502 744 A1**

(12) **EUROPEAN PATENT APPLICATION**
published in accordance with Art. 153(4) EPC

(43) Date of publication:
**05.02.2025 Bulletin 2025/06**

(21) Application number: **23779052.2**

(22) Date of filing: **21.02.2023**

(51) International Patent Classification (IPC):
*G05B 23/02* (2006.01)

(52) Cooperative Patent Classification (CPC):
**G05B 23/02**

(86) International application number:
**PCT/JP2023/006266**

(87) International publication number:
**WO 2023/189022 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.03.2022 JP 2022053597**

(71) Applicant: **Mitsubishi Chemical Engineering
Corporation
Tokyo 103-0021 (JP)**

(72) Inventors:
• **KAWANO, Koji**
  **Tokyo 103-0021 (JP)**
• **MATSUKI, Akihiro**
  **Tokyo 103-0021 (JP)**
• **KUMANOMIDOU, Yuuki**
  **Tokyo 103-0021 (JP)**
• **KIYOHARA, Shunji**
  **Tokyo 103-0021 (JP)**

(74) Representative: **McWilliams, David John
Withers & Rogers LLP
2 London Bridge
London SE1 9RA (GB)**

(54) **DIAGNOSIS DEVICE, DIAGNOSIS METHOD, AND DIAGNOSIS PROGRAM**

(57) The present invention addresses the problem of making it possible to easily ascertain not only state changes associated with changes in process values but also abnormal state changes in equipment. The present invention is a diagnosis device that diagnoses the state of equipment and comprises a storage unit that stores measurement data from sensors provided at various parts of the equipment and a processing unit that diagnoses the state of the equipment from the measurement data. The processing unit reads out measurement data from the sensors from the storage unit and performs: first processing that derives individual previous state quantities and individual new state quantities, the individual previous state quantities being various state quantities for the equipment calculated by processing previous measurement data from the sensors, and the individual new state quantities being various state quantities for the equipment calculated by processing new measurement data; and second processing that derives a general previous state quantity and a general new state quantity, the general previous state quantity being a general state quantity for the equipment that combines the various individual previous state quantities, and the general new state quantity being a general state quantity for the equipment that combines the various individual new state quantities.

EP 4 502 744 A1

# FIG. 7

PREVIOUS DIAGNOSIS

CURRENT DIAGNOSIS

UNEXPERIENCED STATE
HAS OCCURRED

| SYMBOL | Gr |
|--------|-----|
| ○ | 1 |
| △ | 2 |
| + | 3 |
| × | 4 |
| ◇ | 5 |
| ▽ | 6 |
| ⊠ | 7 |
| ✳ | 8 |
| ◈ | 9 |
| ⊕ | 10 |
| ⊗ | UNEXPERIENCED |

**Description**

TECHNICAL FIELD

The present invention relates to a diagnosis device, a diagnosis method, and a diagnosis program.

BACKGROUND ART

In recent years, various technologies for diagnosing states of equipment have been developed (see, e.g., PTL 1).

DOCUMENTS OF PRIOR ARTS

PATENT DOCUMENT

[PTL 1] Japanese Patent No. 6801131

SUMMARY OF THE INVENTION

PROBLEMS TO BE SOLVED BY THE INVENTION

In production equipment that produces various products such as pharmaceuticals, chemical products, and food products, power generation equipment, and various other equipment, process control is basically performed such that various process values such as temperatures and flow rates of raw materials reach predetermined target values. In such equipment, state changes may occur due to various causes such as qualities of input raw materials or modulation of devices. Such state changes may prominently appear as a process value change, or may also appear in the form of a sound or temperature change, instead of appearing in the form of a process value change. For example, even when a state change such as device malfunction or wear of periodic replacement parts has occurred in equipment, as long as process control is normally performed, no change occurs in the process values in many cases.
An equipment state change may also be caused by changes in outside temperature or raw material temperature. Accordingly, it is difficult to determine whether or not an equipment state change that has no effect on the process values is a normal change. Therefore, in a field where equipment is handled, even when a control amount in the process control is slightly different from usual, the real state in the field is that an operation has to be continued without knowing whether or not the change is a normal change.
Therefore, it is a solution to the problem of the present invention to allow not only a state change resulting from a process value change, but also an abnormal equipment state change to be easily ascertained.

MEANS FOR SOLVING THE PROBLEMS

To solve the problem described above, the present invention has attempted: to perform first processing of deriving individual previous state quantities which are various state quantities of equipment calculated by processing previous measurement data from a sensor, as well as individual new state quantities, which are various state quantities of the equipment calculated by processing new measurement data; and to derive a general previous state quantity, which is a general state quantity of the equipment obtained by combining the various individual previous state quantities with each other, as well as a general new state quantity, which is a general state quantity of the equipment obtained by combining the various individual new state quantities with each other.
Specifically, the present invention is a diagnosis device for diagnosing a state of equipment, the diagnosis device including: a storage unit that stores measurement data from a sensor provided in each of portions of the equipment; and a processing unit that diagnoses the state of the equipment on the basis of the measurement data, wherein, when reading, from the storage unit, the measurement data from the sensor, the processing unit performs: first processing of deriving individual previous state quantities, which are various state quantities of the equipment calculated by processing previous measurement data from the sensor, and individual new state quantities, which are various state quantities of the equipment calculated by processing new measurement data; and second processing of deriving a general previous state quantity, which is a general state quantity of the equipment obtained by combining the various individual previous state quantities with each other, and a general new state quantity, which is a general state quantity of the equipment obtained by combining the various individual new state quantities with each other.
The state quantity mentioned herein is a valid value for equipment diagnosis, and examples thereof include a value related to sound emitted from the equipment, a value related to a temperature of the equipment, and various other values.

The diagnosis device described above can diagnose the equipment by not only using the individual state quantities such as, e.g., a sound state, but also using the general state quantity of the equipment obtained by combining the various state quantities with each other. Therefore, even when a state change of the equipment which cannot be sensed merely with a change in the individual state quantities has occurred, it is possible to sense the state change on the basis of a change in the general state quantity.

Note that, when the general new state quantity does not coincide with the general previous state quantity in the second processing, the processing unit may also perform third processing of reporting a state change in the equipment. When such reporting is performed in the diagnosis device, it is possible to more easily sense a state change of the equipment.

In addition, the measurement data includes a process value in process control and a measurement value related to the state of the equipment per se, and the first processing may also include handling the process value and the measurement value as different types and thereby separately deriving the individual previous state quantities based on the process value and the individual previous state quantities based on the measurement value, while separately deriving the individual new state quantities based on the process value and the individual new state quantities based on the measurement value. This allows a state change of the equipment to be more accurately sensed.

The present invention can also be viewed from an aspect of a method or a program. For example, the present invention may also be a diagnosis method for diagnosing a state of equipment, the method including, when reading, from a storage unit that stores measurement data from a sensor provided in each of portions of the equipment, the measurement data from the sensor, causing a computer to execute: first processing of deriving individual previous state quantities, which are various state quantities of the equipment calculated by processing previous measurement data from the sensor, and individual new state quantities, which are various state quantities of the equipment calculated by processing new measurement data; and second processing of deriving a general previous state quantity, which is a general state quantity of the equipment obtained by combining the various individual previous state quantities with each other, and a general new state quantity, which is a general state quantity of the equipment obtained by combining the various individual new state quantities with each other.

EFFECTS OF THE INVENTION

The diagnosis device, the diagnosis method, and the diagnosis program each described above allows not only a state change resulting from a process value change, but also an abnormal state change of the equipment to be easily sensed.

BRIEF DESCRIPTION OF THE DRAWINGS

[Fig. 1] Fig. 1 is a diagram illustrating an example of a hardware configuration of a diagnosis device according to the embodiment.
[Fig. 2] Fig. 2 is a diagram illustrating an example of a processing flow to be implemented by the diagnosis device.
[Fig. 3] Fig. 3 is a diagram illustrating a data set in Case 1.
[Fig. 4] Fig. 4 is a diagram visually representing the individual state quantities in Case 1 by using a two-dimensional map.
[Fig. 5] Fig. 5 is a diagram visually representing the general state quantity in Case 1 by using a two-dimensional map.
[Fig. 6] Fig. 6 is a diagram representing a variation of the general state quantity in Case 1 with time.
[Fig. 7] Fig. 7 is a diagram illustrating a change in the general state quantity in Case 1.
[Fig. 8] Fig. 8 is a diagram illustrating a change in the data set when the unexperienced state has occurred in Case 1.
[Fig. 9] Fig. 9 is a diagram illustrating a data set in Case 2.
[Fig. 10] Fig. 10 is a diagram visually representing the individual state quantities in Case 2 by using a two-dimensional map.
[Fig. 11] Fig. 11 is a diagram visually representing the general state quantity in Case 2 by using a two-dimensional map.
[Fig. 12] Fig. 12 is a diagram illustrating a change in the general state quantity in Case 2.
[Fig. 13] Fig. 13 is a diagram illustrating a change in the data set when the unexperienced state has occurred in Case 2.

MODE FOR CARRYING OUT THE INVENTION

Hereinbelow, a description will be given of an embodiment. The following embodiment is merely exemplary and is not intended to limit a technical scope of the present disclosure to the following mode.

<Hardware Configuration>

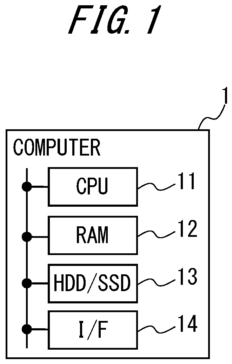

Fig. 1 is a diagram illustrating an example of a hardware configuration of a diagnosis device according to the embodiment. As illustrated in Fig. 1, a diagnosis device 1 is an electronic computer including a CPU 11, a memory 12, a storage 13, and a communication interface 14, and executes a computer program read from the storage 13 and loaded into the memory 12 to perform various processing described later.

The diagnosis device 1 diagnoses production equipment that produces various products such as pharmaceuticals, chemical products, and food products, power generation equipment, and various other equipment. When process control is performed in the equipment to be diagnosed, the diagnosis device 1 processes measurement data related to process values obtained from sensors of the equipment, measurement data from sensors attached for diagnosis to the equipment, or the like to diagnose the equipment. When no process control is performed in the equipment to be diagnosed, the diagnosis device 1 processes measurement data from sensors attached for diagnosis to the equipment or the like to diagnose the equipment. Examples of the sensors attached for diagnosis include a vibration sensor, a temperature sensor, a sound sensor, a thermo-camera, an infrared sensor, and various other sensors.

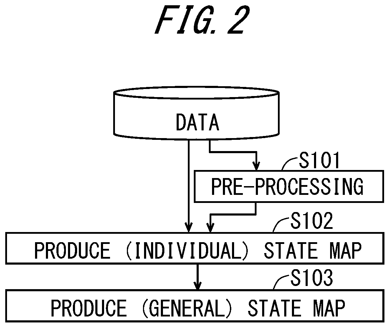

In the diagnosis device 2, the CPU 11 executes the computer program to implement the following processing. Fig. 2 is a diagram illustrating an example of a processing flow to be implemented by the diagnosis device 2. In the diagnosis device 2, the CPU 11 executes the computer program to implement a sequential processing flow from Step S101 to Step S103 illustrated in Fig. 2.

In other words, in the diagnosis device 2, the CPU 11 reads the measurement data stored in the storage 13, and data pre-processing is performed as necessary (S101). Examples of the data pre-processing include performing processing such as Fourier transform, lowpass filter, or inverse Fourier transform on vibration data including a waveform of microscopic vibration. Then, in the diagnosis device 1, processing of producing a map representing individual state quantities (S102) and processing of producing a map representing a general state quantity (S103) is performed.

In the processing in Step S102, individual previous state quantities (individual state quantities) which are equipment state quantities calculated by separately processing previous measurement data obtained by the sensors according to the type of each of the sensors and individual new state quantities (individual state quantities) which are equipment state quantities calculated by separately processing new measurement data according to the type of each of the sensors are derived. Meanwhile, in the processing in Step S103, a general previous state quantity (general state quantity) which is a general equipment state quantity obtained by combining the individual previous state quantities with each other and a general new state quantity (general state quantity) which is a general equipment state quantity obtained by combining the individual new state quantities with each other are derived. Calculation of the individual previous state quantities and the general previous state quantity, which is based on the previous measurement data, and calculation of the individual new state quantities and the general new state quantity, which is based on the new measurement data, are not clearly distinctly and separately performed. Supposing that the individual state quantities and the general state quantity are calculated with specific timing, and then new measurement data is added as a result of operation of the equipment, when the individual state quantities and the general state quantity are calculated by lumping the previous measurement data and the new measurement data together, a state is reached in which the calculation of the individual previous state quantities and the general previous state quantity, which is based on the previous measurement data, and the calculation of the individual new state quantities and the general new state quantity, which is based on the new measurement data, is substantially performed.

The following will describe details of the processing in Step S102 and Step S103 by using specific examples in several cases.

<Case 1>

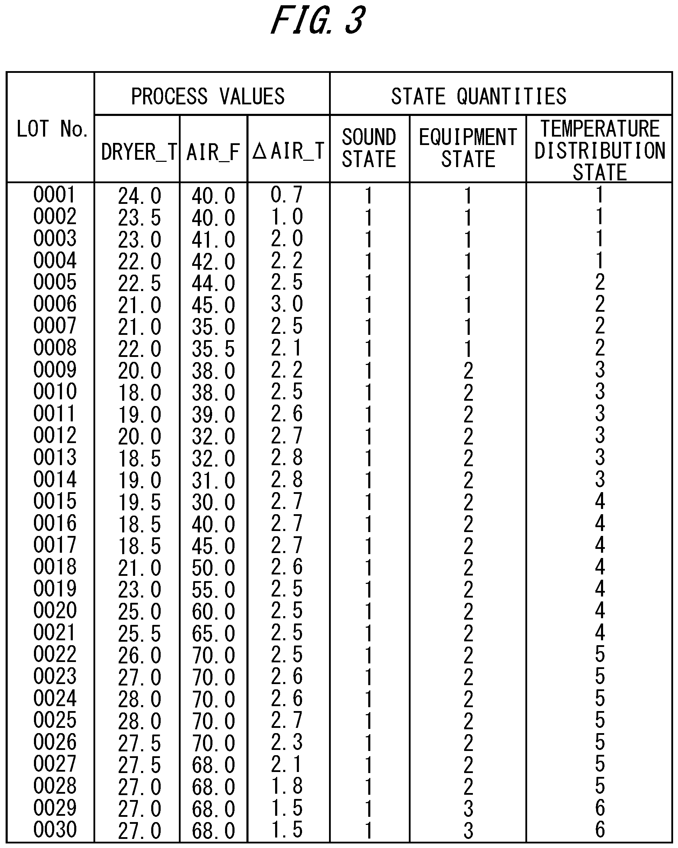

Fig. 3 is a diagram illustrating a data set in Case 1. As illustrated in Fig. 3, examples of variables included in the data set include net process values such as a temperature, a flow rate, and a pressure and values representing types of the states such as sound, equipment, and a temperature distribution. These variables included in the data set are, e.g., organized in chronological order at appropriate predetermined time intervals (in lots), as illustrated in Fig. 3. Accordingly, as for the process values, various elements such as the temperature, the flow rate, and the pressure varying from moment to moment are represented by numerical data, as illustrated in Fig. 3. Meanwhile, as for the values (state quantities) representing the types of the state of the equipment, the individual state quantities representing states of the various elements such as the sound and the equipment varying from moment to moment are represented by numeral data, as illustrated in Fig. 3.

As for the process values included in the data set, the measurement data may also be incorporated directly into the data set, representative values such as a mean value or a maximum value of the measurement data in a predetermined time interval may also be incorporated into the data set or, alternatively, values resulting from transform through the various pre-processing in Step S101 described above may also be incorporated into the data set.

As for the individual state quantities included in the data set, in Step S102 described above, data analysis is performed on each of several elements such as, e.g., measurement data related to sound emitted from the equipment, data related to an operating state of the equipment, and measurement data related to a temperature distribution over a surface of the equipment on a per type basis and, for each of the elements, the states are grouped at the predetermined time intervals. Specifically, the state quantities are specified by the following processing.

In other words, the measurement data related to the state of the equipment is standardized and converted to intermediate variables. Specifically, the diagnosis device 1 performs calculation on the basis of Numerical Expression 1. [Math. 1]

$$Z = \frac{x - \mu}{\sigma} \qquad (1)$$

($\chi$: Data, $\mu$: Average value, $\sigma$: standard deviation)

Next, vectorization is performed on the basis of the intermediate variables obtained above. First, a correlation coefficient matrix in the intermediate variables is produced herein, and specific values and specific vectors of the correlation coefficient matrix are derived. When the intermediate variables are x1, x2, x3 ..., a first principal component PC1 of the correlation coefficient matrix is represented as shown in Numerical Expression (2). Meanwhile, an N-th principal component PCn thereof is represented as shown in Numerical Expression 3. Then, by using coefficients a11, a12, a13 ... as 1st-row elements and using coefficients an1, an2, an3 ... as n-throw elements, the correlation coefficient matrix is formed.
[Math. 2]

$$PC1 = a_{11} \times x_1 + a_{12} \times x_2 + a_{13} \times x_3 + \cdots \qquad (2)$$

[Math. 3]

$$PCn = a_{n1} \times x_1 + a_{n2} \times x_2 + a_{n3} \times x_3 + \cdots \qquad (3)$$

Next, from the specific vectors of the correlation coefficient matrix, principal component scores are obtained. Meanwhile, from the specific values of the correlation coefficient matrix, respective contribution ratios of the individual principal components are obtained. The contribution ratio of each of the principal components is obtained by dividing the specific value by a sum of the specific values. In descending order of the specific values, the first principal component, the second principal component, ..., and the N-th principal component are determined herein.

Specifically, the diagnosis device 1 calculates, on the basis of the intermediate variables x1, x2, and x3 in each of the lots and each of the coefficients in the correlation coefficient matrix, values of the first principal component PC1, the second principal component PC2, ..., i.e., the principal component scores.

Next, the diagnosis device 1 applies cluster analysis to the principal component scores to assign the individual measurement data items to a plurality of groups. The "cluster analysis" is a method of classifying analysis target data items (clusters) into a plurality of groups by focusing attention on similarity, and hierarchical clustering, classification optimization clustering, and the like are known. The "similarity" on which the cluster analysis focuses attention in the present embodiment refers to distances between the principal component scores in each of the lots. In the present embodiment, agglomerative hierarchical clustering, which is a type of hierarchical clustering, was used. Meanwhile, as a method of calculating distances between the clusters, a Ward method which allows solutions to be stably obtained was used. In the "Ward system", when two clusters are joined together, the cluster that minimizes an increase of a sum of squared deviation is selected. For example, when a cluster C is to be generated by jointing clusters A and B together, respective sums of squared deviation Sa, Sb, and Sc inside the clusters A, B, and C are represented as in Numerical Expressions 4 to 6:
[Math. 4]

$$Sa = \sum_{k=1}^{p} \sum_{i=1}^{n_a} \left( x_{ki}^A - \overline{x}_k^A \right)^2 \qquad \text{where} \qquad \overline{x}_k^A = \frac{1}{n_a} \sum_{i=1}^{n_a} x_{ki}^A \qquad (4)$$

$x_{ki}^A$ : i-th (1, 2, ..., $n_a$) data at variable k (1, 2, ..., p) belonging to cluster A

[Math. 5]

$$Sb = \sum_{k=1}^{p} \sum_{i=1}^{n_b} \left( x_{ki}^{B} - \overline{x}_{k}^{B} \right)^2 \qquad \text{where} \qquad \overline{x}_{k}^{B} = \frac{1}{n_b} \sum_{i=1}^{n_b} x_{ki}^{B} \qquad (5)$$

$x_{ki}^{B}$ : i-th (1, 2, ..., $n_b$) data at variable k (1, 2, ..., p) belonging to cluster B

[Math. 6]

$$Sc = \sum_{k=1}^{p} \sum_{i=1}^{n_c} \left( x_{ki}^{C} - \overline{x}_{k}^{C} \right)^2 = \sum_{k=1}^{p} \left[ \sum_{i=1}^{n_a} \left( x_{ki}^{A} - \overline{x}_{k}^{C} \right)^2 + \sum_{i=1}^{n_b} \left( x_{ki}^{B} - \overline{x}_{k}^{C} \right)^2 \right] \qquad (6)$$

where

$$\overline{x}_{k}^{C} = \frac{1}{n_c} \sum_{i=1}^{n_c} x_{ki}^{C} = \frac{n_a}{n_a + n_b} \overline{x}_{k}^{A} + \frac{n_b}{n_a + n_b} \overline{x}_{k}^{B}$$

According to Numerical Expressions 4 to 6, a sum of squared deviation Sc inside the cluster C is given by the following expression:

[Math. 7]

$$Sc = Sa + Sb + \Delta Sab \qquad \text{where} \qquad \Delta Sab = \frac{n_a n_b}{n_a + n_b} \sum_{k=1}^{p} \left( \overline{x}_{k}^{A} - \overline{x}_{k}^{B} \right)^2 \qquad (7)$$

In Numerical Expression 7, $\Delta$Sab represents the increase in the sum of squared deviation when the cluster C was generated by joining the clusters A and B together. Accordingly, by selecting and joining the cluster so as to minimize $\Delta$Sab at each joining stage, the clustering is advanced. Then, each of the measurement data items is segmented into each of an appropriate number of groups.

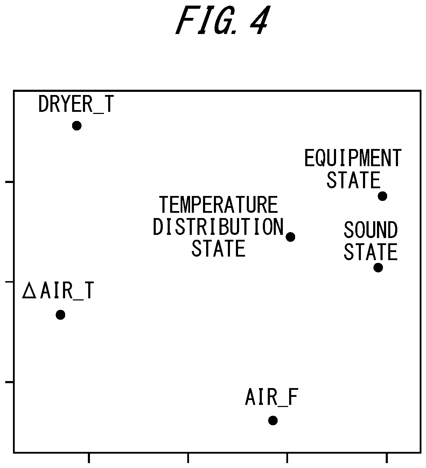

By a method as described above, the state quantities related to various types of equipment states, such as the sound, the equipment, and the temperature distribution, are specified and incorporated into the data set. Fig. 4 is a diagram visually representing the individual state quantities in Case 1 by using a two-dimensional map. By performing the processing in Step S102, it is possible to quantitatively represent, as the state quantities, the states related to states of the equipment, such as the sound, the equipment, and the temperature distribution as well as the process values such as the temperature, the flow rate, and the pressure.

On the data set produced through the foregoing processing, the processing in Step S103 described above is subsequently performed. In other words, in Step S102 described above, the data analysis is performed on the several elements on a per type basis to specify the state quantities for each of the elements at the predetermined time intervals while, in Step S103, data analysis is performed in a state where these elements are integrated to further specify the general state quantity of the equipment.

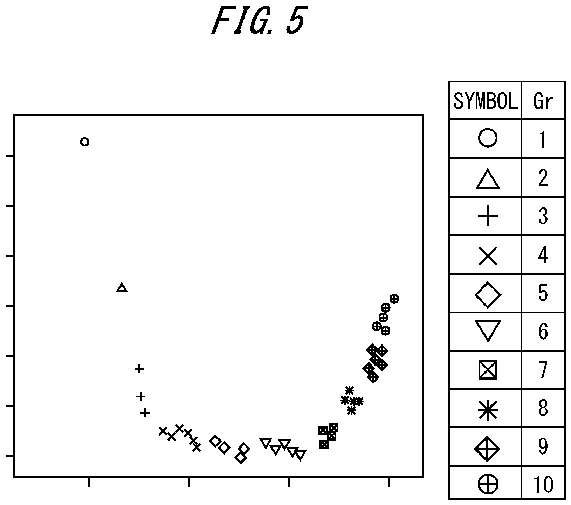

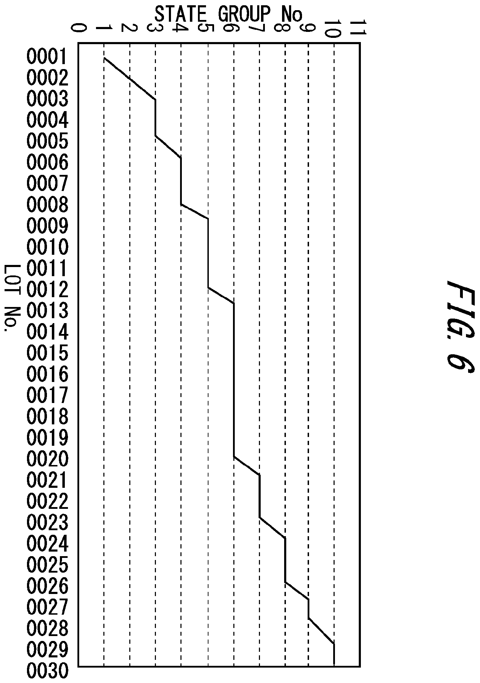

More specifically, with respect to the measurement data and the individual state quantities as a whole shown in the individual rows in the data set illustrated in Fig. 3, conversion to the intermediate variables based on Numerical Expression 1, vectorization based on the intermediate variables, calculation of the principal component scores, clustering, and the like are performed in the same manner as in the specification of the state quantities in Step S102 described above, and specification of a general state quantity resulting from the integration of the individual elements is performed for each of the rows in the data set. Fig. 5 is a diagram visually representing the general state quantity in Case 1 by using a two-dimensional map. Meanwhile, Fig. 6 is a diagram representing a variation of the general state quantity in Case 1 with time. By performing the processing in Step S103, it is possible to quantitatively represent, as the state quantity, a general state where the individual elements related to the equipment states are integrated with each other, as illustrated in Fig. 6. Note that, in Fig. 5 and Fig. 6, an example is shown in which the general state is classified into 10 groups, and therefore group number of the general state quantity are expressed in 10 levels of 1 to 10. In Fig. 6, the group number of the general state quantity varying with a lapse of time are illustrated.

As a result of performing the processing described thus far on the previous measurement data and the new measurement data, when any state change occurs in the equipment, the following difference is produced between the general state quantity based on the previous measurement data and the general state quantity based on the new measurement data.

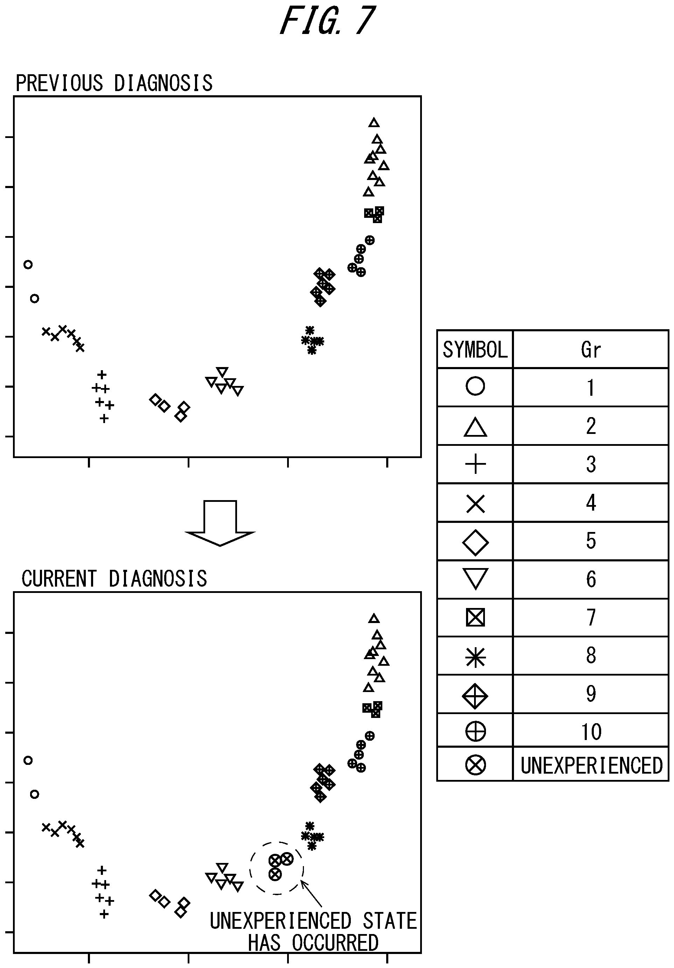

Fig. 7 is a diagram illustrating a change in the general state quantity in Case 1. Normally, since several elements emitted from the equipment, such as a temperature distribution and sound, are elements which belong to different systems such as temperature and sound, and cannot be handled in common with each other, it is natural to assume that these elements should not be handled in the same data set. However, the state change of the equipment may cause the different systems to affect each other. Therefore, in the present embodiment, the processing in Step S103 described above is performed, and the general state quantity is used to diagnose the equipment. As a result, when, e.g., an unexperienced state that has not been previously experienced newly occurs in the equipment to be diagnosed, as illustrated in Fig. 7, the occurrence of the unexperienced state visually appears in the figure two-dimensionally representing the general state quantity. Accordingly, reporting through display on a screen of the diagnosis device 1 allows a user of the diagnosis device 1 to recognize the occurrence of the unexperienced state in the equipment to be diagnosed. Then, by checking the individual state quantities as necessary, the user of the diagnosis device 1 can specify a cause of the state change of the equipment to an extent.

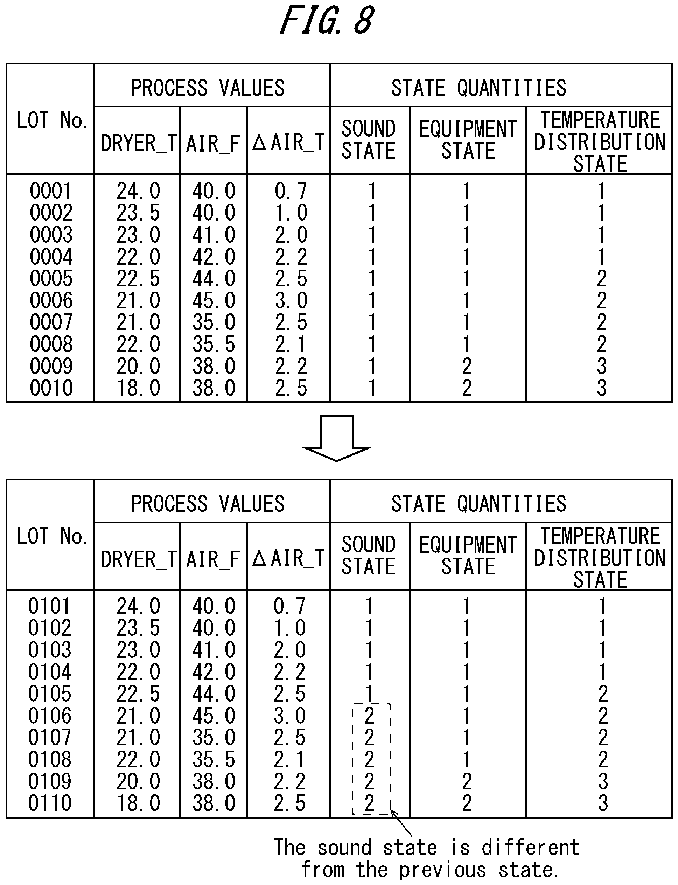

Fig. 8 is a diagram illustrating a change in the data set when the unexperienced state has occurred in Case 1. In the example illustrated in Fig. 8, a case is shown by way of example in which the state quantity representing the sound state, which is normally "1", is "2". By merely individually monitoring each of the state quantities of the elements related to the equipment state, it is difficult to determine whether or not the state is a previously unexperienced state. However, the diagnosis device 1 in the present embodiment can perform diagnosis by using the general state quantity obtained by integrating the individual elements related to the state of the equipment, and therefore it is possible to easily detect the occurrence of the unexperienced state that has not been previously experienced in the equipment.

<Case 2>

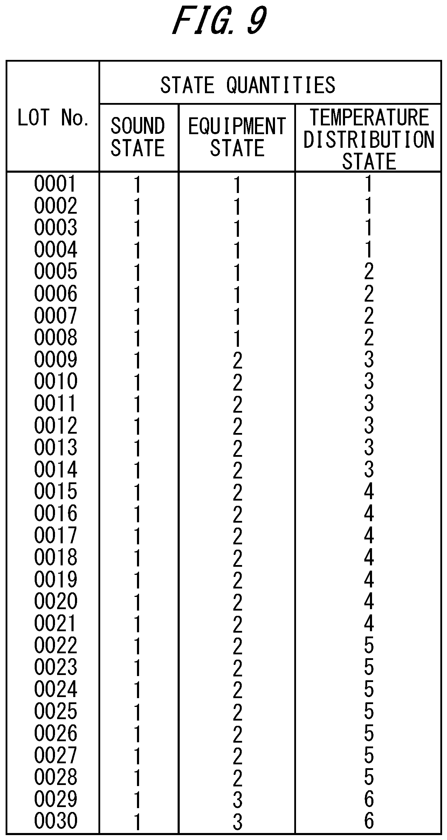

In Case 1 described above, the case using the data set obtained by combining the process values with the individual state quantities has been described by way of example, but the embodiment described above is not limited to a case where the embodiment is applied to such a data set. The embodiment described above may also be applied to a data set configured to include only the individual state quantities. Fig. 9 is a diagram illustrating a data set in Case 2. In Case 2, as illustrated in Fig. 9, examples of variables included in the data set include values (individual state quantities) representing types of respective states of sound, equipment, a temperature distribution, and the like. These variables included in the data set are organized in chronological order at appropriate predetermined time intervals (in lots), in the same manner as in Case 1 described above. Accordingly, in the types of the states included in the data set, as illustrated in, e.g., Fig. 3, the individual state quantities varying from moment to moment are represented by numerical data.

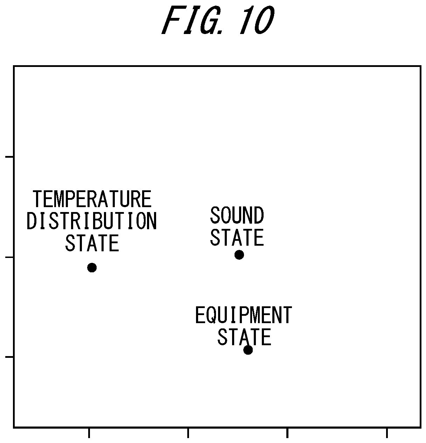

On the individual state quantities included in the data set, as described also in Case 1, data analysis is performed on the several elements such as, e.g., the measurement data related to sound emitted from the equipment, data related to the operating state of the equipment, and the measurement data related to the temperature distribution over the surface of the equipment in Step S102 on a per type basis, and the individual state quantities are specified for the individual elements at the predetermined time intervals. Fig. 10 is a diagram visually representing the individual state quantities in Case 2 by using a two-dimensional map. By performing the processing in Step S102, it is possible to quantitatively represent, as the individual state quantities, states related to the state of the equipment, such as the sound, the equipment, and the temperature distribution.

On the data set produced through the foregoing processing, the processing in Step S103 described above is subsequently performed in the same manner as in Case 1. In other words, in a state where the individual elements are integrated with each other, the data analysis is performed to further specify the general state quantity of the equipment.

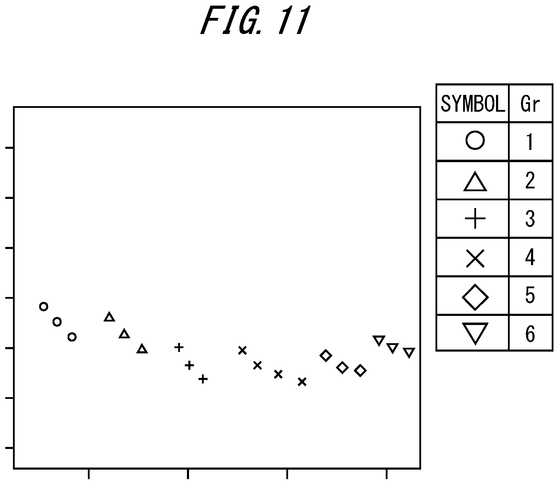

More specifically, with respect to the individual state quantities as a whole shown in the individual rows in the data set illustrated in Fig. 9, conversion to the intermediate variables based on Numerical Expression 1, vectorization based on the intermediate variables, calculation of the principal component scores, clustering, and the like are performed in the same manner as in the specification of the state quantities in Step S102 described above, and specification of a general state quantity resulting from the integration of the individual elements is performed for each of the rows in the data set. Fig. 11 is a diagram visually representing the general state quantity in Case 2 by using a two-dimensional map. By performing the processing in Step S103, it is possible to quantitatively represent, as the state quantity, a general state where the individual elements related to the equipment states are integrated with each other, as illustrated in Fig. 11. Note that, in Fig. 11, an example is shown in which the general state quantity is classified into 6 groups, and therefore group number of the general state quantity are expressed in 6 levels of 1 to 6.

As a result of performing the processing described thus far on the previous measurement data and the new measurement data, when any state change occurs in the equipment, the following difference is produced between the general state quantity based on the previous measurement data and the general state quantity based on the new measurement data.

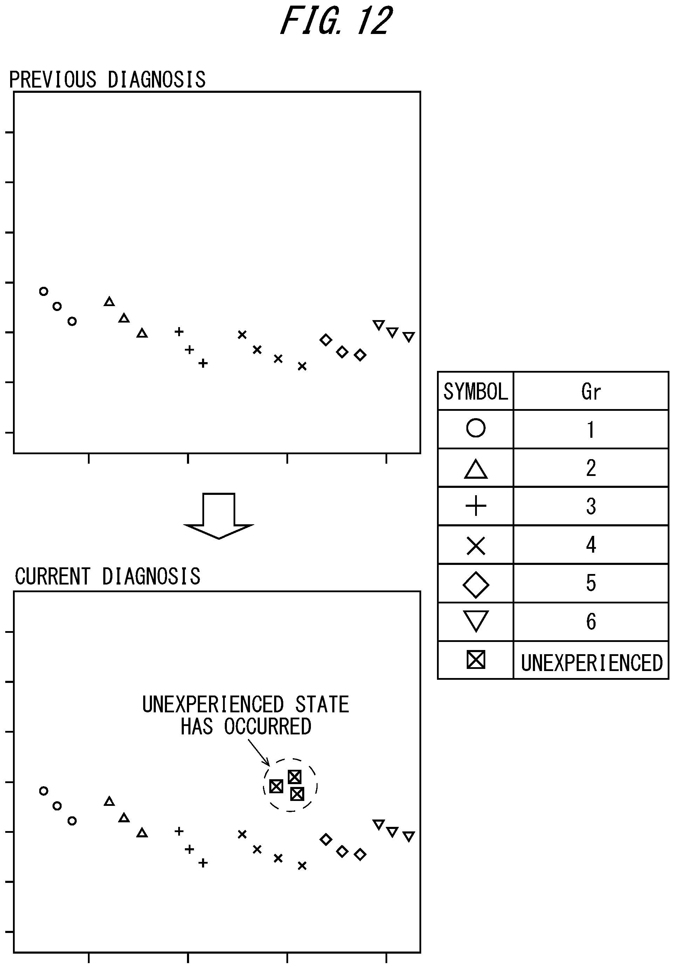

Fig. 12 is a diagram illustrating a change in the general state quantity in Case 2. In Case 2 also, in the same manner as in Case 1, when, e.g., an unexperienced state that has not been previously experienced newly occurs in the equipment to be diagnosed, as illustrated in Fig. 12, the occurrence of the unexperienced state visually appears in the figure two-dimensionally representing the general state quantity. Accordingly, the user of the diagnosis device 1 can recognize the occurrence of the unexperienced state in the equipment to be diagnosed. Then, by checking the individual state quantities as necessary, the user of the diagnosis device 1 can specify a cause of the state change of the equipment to an extent.

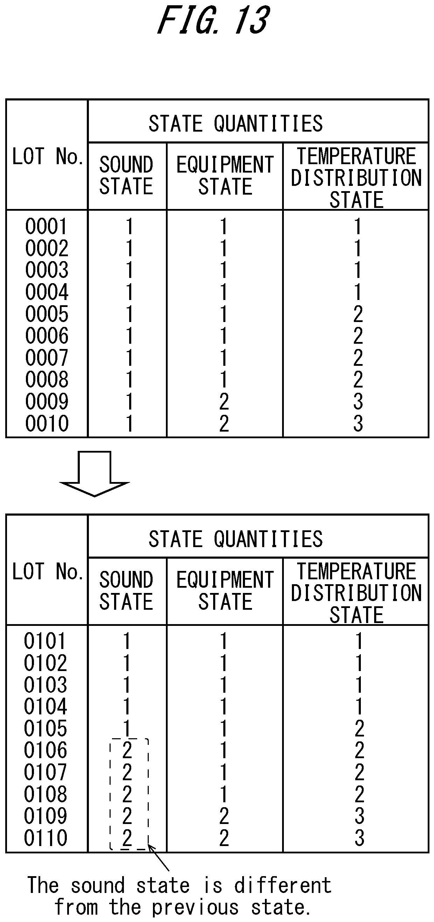

Fig. 13 is a diagram illustrating a change in the data set when the unexperienced state has occurred in Case 2. In the example illustrated in Fig. 13, a case is shown by way of example in which the state quantity representing the sound state, which is normally "1", is "2". By merely individually monitoring each of the state quantities of the elements related to the equipment state, it is difficult to determine whether or not the state is a previously unexperienced state. However, in the same manner as in Case 1, the diagnosis device 1 in the present embodiment can perform diagnosis by using the general state quantity obtained by integrating the individual elements related to the state of the equipment with each other, and therefore it is possible to easily detect the occurrence of the unexperienced state that has not been previously experienced in the equipment.

<Other Cases>

In Case 1 and Case 2 each described above, the individual state quantities are represented by three or more types of state quantities (10 types in Case 1 and 6 types in Case 2), but the individual state quantities are not limited to such a mode. The individual state quantities may also be, e.g., two types of 1 (applicable) and 0 (inapplicable). Even when the individual state quantities are configured to include two types of values, it is possible to specify the general state quantity on the basis of these in the same manner as in Case 1 and Case 2 described above and perform sensing of occurrence of the unexperienced state or the like. In addition, the data set processed in Step S103 may also include not the net process values, but the state quantities representing the process values.

In Case 1 and Case 2 each described above, the case where the state quantity of the sound state is different from the previous state quantity has been described as an example of the cause of the detection of the unexperienced state but, in a case where the state quantity other than that of the sound state is different from the previous state quantity or where the process value is different from the previous process value also, the unexperienced state can similarly be detected. For example, in a case where there is a change in physical properties of a raw material input to the equipment due to a change in a quality of the raw material, a change in outside temperature, or the like, where the process control does not correctly function, or where no process control is performed, a state may be reached where the process value is different from the previous process value. In the embodiment described above, even when such a change has occurred in the process value, the general state value changes, and therefore it is possible to sense the occurrence of the unexperienced state.

<Modification>

Note that the diagnosis device 1 is not limited to the mode described above. The diagnosis device 1 may also be in a mode in which, e.g., part or all of the processing is performed in a cloud. In addition, it may also be possible to combine the cases described above with each other or with a modification.

<Computer-readable Recording Medium>

It is possible to record a program which causes a computer, other machines, or a device (hereinafter, a computer or the like) to implement any of the functions described above in a recording medium which can be read by the computer or the like. In addition, it is possible to cause the computer or the like to provide the function by causing the computer or the like to read and execute the program in the recording medium.

Herein, the recording medium which can be read by the computer or the like denotes a recording medium which can store information such as data or a program by electrical, magnetic, optical, mechanical, or chemical action and read the information from the computer or the like. Examples of such a recording medium which can be detached from the computer or the like include a flexible disk, a magneto-optical disk, a CD-ROM, a CD-R/W, a DVD, a Blu-ray disk (Blu-ray is a registered trademark), a DAT, an 8 mm tape, and a memory card such as a flash memory. In addition, examples of a recording medium fixed to the computer or the like include a hard disk and a ROM (read-only memory).

DESCRIPTION OF SYMBOLS

1     Diagnosis device
11    CPU
12    Memory
13    Storage
14    Communication interface

**Claims**

1.  A diagnosis device for diagnosing a state of equipment, the diagnosis device comprising:

    a storage unit that stores measurement data from a sensor provided in each of portions of the equipment; and
    a processing unit that diagnoses the state of the equipment on the basis of the measurement data, wherein, when reading, from the storage unit, the measurement data from the sensor, the processing unit performs:

    first processing of deriving individual previous state quantities, which are various state quantities of the equipment calculated by processing previous measurement data from the sensor, and individual new state quantities, which are various state quantities of the equipment calculated by processing new measurement data; and
    second processing of deriving a general previous state quantity, which is a general state quantity of the equipment obtained by combining the various individual previous state quantities with each other, and a general new state quantity, which is a general state quantity of the equipment obtained by combining the various individual new state quantities with each other.

2.  The diagnosis device according to claim 1, wherein, when the general new state quantity does not coincide with the general previous state quantity in the second processing, the processing unit performs third processing of reporting a state change in the equipment.

3.  The diagnosis device according to claim 1 or 2, wherein

    the measurement data includes a process value in process control and a measurement value related to the state of the equipment per se, and
    the first processing includes handling the process value and the measurement value as different types and thereby separately deriving the individual previous state quantities based on the process value and the individual previous state quantities based on the measurement value, while separately deriving the individual new state quantities based on the process value and the individual new state quantities based on the measurement value.

4.  A diagnosis method for diagnosing a state of equipment, the method comprising,
    when reading, from a storage unit that stores measurement data from a sensor provided in each of portions of the equipment, the measurement data from the sensor, causing a computer to execute:

    first processing of deriving individual previous state quantities, which are various state quantities of the equipment calculated by processing previous measurement data from the sensor, and individual new state quantities, which are various state quantities of the equipment calculated by processing new measurement data; and
    second processing of deriving a general previous state quantity, which is a general state quantity of the equipment obtained by combining the various individual previous state quantities with each other, and a general new state quantity, which is a general state quantity of the equipment obtained by combining the various individual new state quantities with each other.

5.  A diagnosis program for diagnosing a state of equipment,
    when reading, from a storage unit that stores measurement data from a sensor provided in each of portions of the equipment, the measurement data from the sensor, the diagnosis program causing the computer to execute:

    first processing of deriving individual previous state quantities, which are various state quantities of the equipment calculated by processing previous measurement data from the sensor, and individual new state quantities, which are various state quantities of the equipment calculated by processing new measurement data; and
second processing of deriving a general previous state quantity, which is a general state quantity of the equipment obtained by combining the various individual previous state quantities with each other, and a general new state quantity, which is a general state quantity of the equipment obtained by combining the various individual new state quantities with each other.

*FIG. 1*

COMPUTER

| CPU | ~11 |
| RAM | ~12 |
| HDD/SSD | ~13 |
| I/F | ~14 |

1

# FIG. 2

DATA

S101
PRE-PROCESSING

S102
PRODUCE (INDIVIDUAL) STATE MAP

S103
PRODUCE (GENERAL) STATE MAP

## FIG. 3

| LOT No. | PROCESS VALUES | | | STATE QUANTITIES | | |
|---|---|---|---|---|---|---|
| | DRYER_T | AIR_F | △AIR_T | SOUND STATE | EQUIPMENT STATE | TEMPERATURE DISTRIBUTION STATE |
| 0001 | 24.0 | 40.0 | 0.7 | 1 | 1 | 1 |
| 0002 | 23.5 | 40.0 | 1.0 | 1 | 1 | 1 |
| 0003 | 23.0 | 41.0 | 2.0 | 1 | 1 | 1 |
| 0004 | 22.0 | 42.0 | 2.2 | 1 | 1 | 1 |
| 0005 | 22.5 | 44.0 | 2.5 | 1 | 1 | 2 |
| 0006 | 21.0 | 45.0 | 3.0 | 1 | 1 | 2 |
| 0007 | 21.0 | 35.0 | 2.5 | 1 | 1 | 2 |
| 0008 | 22.0 | 35.5 | 2.1 | 1 | 1 | 2 |
| 0009 | 20.0 | 38.0 | 2.2 | 1 | 2 | 3 |
| 0010 | 18.0 | 38.0 | 2.5 | 1 | 2 | 3 |
| 0011 | 19.0 | 39.0 | 2.6 | 1 | 2 | 3 |
| 0012 | 20.0 | 32.0 | 2.7 | 1 | 2 | 3 |
| 0013 | 18.5 | 32.0 | 2.8 | 1 | 2 | 3 |
| 0014 | 19.0 | 31.0 | 2.8 | 1 | 2 | 3 |
| 0015 | 19.5 | 30.0 | 2.7 | 1 | 2 | 4 |
| 0016 | 18.5 | 40.0 | 2.7 | 1 | 2 | 4 |
| 0017 | 18.5 | 45.0 | 2.7 | 1 | 2 | 4 |
| 0018 | 21.0 | 50.0 | 2.6 | 1 | 2 | 4 |
| 0019 | 23.0 | 55.0 | 2.5 | 1 | 2 | 4 |
| 0020 | 25.0 | 60.0 | 2.5 | 1 | 2 | 4 |
| 0021 | 25.5 | 65.0 | 2.5 | 1 | 2 | 4 |
| 0022 | 26.0 | 70.0 | 2.5 | 1 | 2 | 5 |
| 0023 | 27.0 | 70.0 | 2.6 | 1 | 2 | 5 |
| 0024 | 28.0 | 70.0 | 2.6 | 1 | 2 | 5 |
| 0025 | 28.0 | 70.0 | 2.7 | 1 | 2 | 5 |
| 0026 | 27.5 | 70.0 | 2.3 | 1 | 2 | 5 |
| 0027 | 27.5 | 68.0 | 2.1 | 1 | 2 | 5 |
| 0028 | 27.0 | 68.0 | 1.8 | 1 | 2 | 5 |
| 0029 | 27.0 | 68.0 | 1.5 | 1 | 3 | 6 |
| 0030 | 27.0 | 68.0 | 1.5 | 1 | 3 | 6 |

# FIG. 4

# FIG. 5

| SYMBOL | Gr |
|:---:|:---:|
| ○ | 1 |
| △ | 2 |
| + | 3 |
| × | 4 |
| ◇ | 5 |
| ▽ | 6 |
| ⊠ | 7 |
| ✳ | 8 |
| ⬦ | 9 |
| ⊕ | 10 |

## FIG. 6

## FIG. 7

PREVIOUS DIAGNOSIS

CURRENT DIAGNOSIS

UNEXPERIENCED STATE
HAS OCCURRED

| SYMBOL | Gr |
|--------|----|
| ○ | 1 |
| △ | 2 |
| + | 3 |
| × | 4 |
| ◇ | 5 |
| ▽ | 6 |
| ⊠ | 7 |
| ✳ | 8 |
| ⊕ | 9 |
| ⊕ | 10 |
| ⊗ | UNEXPERIENCED |

## FIG. 8

| LOT No. | PROCESS VALUES | | | STATE QUANTITIES | | |
|---|---|---|---|---|---|---|
| | DRYER_T | AIR_F | △AIR_T | SOUND STATE | EQUIPMENT STATE | TEMPERATURE DISTRIBUTION STATE |
| 0001 | 24.0 | 40.0 | 0.7 | 1 | 1 | 1 |
| 0002 | 23.5 | 40.0 | 1.0 | 1 | 1 | 1 |
| 0003 | 23.0 | 41.0 | 2.0 | 1 | 1 | 1 |
| 0004 | 22.0 | 42.0 | 2.2 | 1 | 1 | 1 |
| 0005 | 22.5 | 44.0 | 2.5 | 1 | 1 | 2 |
| 0006 | 21.0 | 45.0 | 3.0 | 1 | 1 | 2 |
| 0007 | 21.0 | 35.0 | 2.5 | 1 | 1 | 2 |
| 0008 | 22.0 | 35.5 | 2.1 | 1 | 1 | 2 |
| 0009 | 20.0 | 38.0 | 2.2 | 1 | 2 | 3 |
| 0010 | 18.0 | 38.0 | 2.5 | 1 | 2 | 3 |

⇩

| LOT No. | PROCESS VALUES | | | STATE QUANTITIES | | |
|---|---|---|---|---|---|---|
| | DRYER_T | AIR_F | △AIR_T | SOUND STATE | EQUIPMENT STATE | TEMPERATURE DISTRIBUTION STATE |
| 0101 | 24.0 | 40.0 | 0.7 | 1 | 1 | 1 |
| 0102 | 23.5 | 40.0 | 1.0 | 1 | 1 | 1 |
| 0103 | 23.0 | 41.0 | 2.0 | 1 | 1 | 1 |
| 0104 | 22.0 | 42.0 | 2.2 | 1 | 1 | 1 |
| 0105 | 22.5 | 44.0 | 2.5 | 1 | 1 | 2 |
| 0106 | 21.0 | 45.0 | 3.0 | 2 | 1 | 2 |
| 0107 | 21.0 | 35.0 | 2.5 | 2 | 1 | 2 |
| 0108 | 22.0 | 35.5 | 2.1 | 2 | 1 | 2 |
| 0109 | 20.0 | 38.0 | 2.2 | 2 | 2 | 3 |
| 0110 | 18.0 | 38.0 | 2.5 | 2 | 2 | 3 |

The sound state is different from the previous state.

## FIG. 9

| LOT No. | STATE QUANTITIES | | |
|---|---|---|---|
| | SOUND STATE | EQUIPMENT STATE | TEMPERATURE DISTRIBUTION STATE |
| 0001 | 1 | 1 | 1 |
| 0002 | 1 | 1 | 1 |
| 0003 | 1 | 1 | 1 |
| 0004 | 1 | 1 | 1 |
| 0005 | 1 | 1 | 2 |
| 0006 | 1 | 1 | 2 |
| 0007 | 1 | 1 | 2 |
| 0008 | 1 | 1 | 2 |
| 0009 | 1 | 2 | 3 |
| 0010 | 1 | 2 | 3 |
| 0011 | 1 | 2 | 3 |
| 0012 | 1 | 2 | 3 |
| 0013 | 1 | 2 | 3 |
| 0014 | 1 | 2 | 3 |
| 0015 | 1 | 2 | 4 |
| 0016 | 1 | 2 | 4 |
| 0017 | 1 | 2 | 4 |
| 0018 | 1 | 2 | 4 |
| 0019 | 1 | 2 | 4 |
| 0020 | 1 | 2 | 4 |
| 0021 | 1 | 2 | 4 |
| 0022 | 1 | 2 | 5 |
| 0023 | 1 | 2 | 5 |
| 0024 | 1 | 2 | 5 |
| 0025 | 1 | 2 | 5 |
| 0026 | 1 | 2 | 5 |
| 0027 | 1 | 2 | 5 |
| 0028 | 1 | 2 | 5 |
| 0029 | 1 | 3 | 6 |
| 0030 | 1 | 3 | 6 |

## FIG. 10

TEMPERATURE
DISTRIBUTION
STATE
●

SOUND
STATE
●

EQUIPMENT
STATE
●

FIG. 11

| SYMBOL | Gr |
|--------|----|
| ○ | 1 |
| △ | 2 |
| + | 3 |
| × | 4 |
| ◇ | 5 |
| ▽ | 6 |

## FIG. 12

PREVIOUS DIAGNOSIS

CURRENT DIAGNOSIS

UNEXPERIENCED STATE
HAS OCCURRED

| SYMBOL | Gr |
|:---:|:---:|
| ○ | 1 |
| △ | 2 |
| + | 3 |
| × | 4 |
| ◇ | 5 |
| ▽ | 6 |
| ⊠ | UNEXPERIENCED |

## FIG. 13

| LOT No. | STATE QUANTITIES | | |
| --- | --- | --- | --- |
| | SOUND STATE | EQUIPMENT STATE | TEMPERATURE DISTRIBUTION STATE |
| 0001 | 1 | 1 | 1 |
| 0002 | 1 | 1 | 1 |
| 0003 | 1 | 1 | 1 |
| 0004 | 1 | 1 | 1 |
| 0005 | 1 | 1 | 2 |
| 0006 | 1 | 1 | 2 |
| 0007 | 1 | 1 | 2 |
| 0008 | 1 | 1 | 2 |
| 0009 | 1 | 2 | 3 |
| 0010 | 1 | 2 | 3 |

| LOT No. | STATE QUANTITIES | | |
| --- | --- | --- | --- |
| | SOUND STATE | EQUIPMENT STATE | TEMPERATURE DISTRIBUTION STATE |
| 0101 | 1 | 1 | 1 |
| 0102 | 1 | 1 | 1 |
| 0103 | 1 | 1 | 1 |
| 0104 | 1 | 1 | 1 |
| 0105 | 1 | 1 | 2 |
| 0106 | 2 | 1 | 2 |
| 0107 | 2 | 1 | 2 |
| 0108 | 2 | 1 | 2 |
| 0109 | 2 | 2 | 3 |
| 0110 | 2 | 2 | 3 |

The sound state is different from the previous state.

# EP 4 502 744 A1

## INTERNATIONAL SEARCH REPORT

| International application No. |
|---|
| **PCT/JP2023/006266** |

### A. CLASSIFICATION OF SUBJECT MATTER

*G05B 23/02*(2006.01)i
FI: G05B23/02 T

According to International Patent Classification (IPC) or to both national classification and IPC

### B. FIELDS SEARCHED

Minimum documentation searched (classification system followed by classification symbols)

G05B23/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2016-206784 A (IHI CORP.) 08 December 2016 (2016-12-08) | 1, 4-5 |
| | paragraphs [0028]-[0032], [0038], [0046]-[0047], [0056]-[0061], [0080], fig. 1, 5-7 | |
| Y | | 2-3 |
| Y | JP 2016-18526 A (EBARA CORP.) 01 February 2016 (2016-02-01) | 2 |
| | paragraph [0084], fig. 20 | |
| Y | JP 2003-167623 A (TOSHIBA CORP.) 13 June 2003 (2003-06-13) | 3 |
| | paragraphs [0032], [0036], [0049], fig. 11 | |
| A | JP 2004-252875 A (MITSUBISHI ELECTRIC CORP.) 09 September 2004 (2004-09-09) | 1-5 |
| | entire text, all drawings | |
| A | JP 2000-99130 A (FFC KK) 07 April 2000 (2000-04-07) | 1-5 |
| | entire text, all drawings | |
| A | WO 2020/090770 A1 (JAPAN AEROSPACE EXPLORATION AGCY.) 07 May 2020 (2020-05-07) | 1-5 |
| | entire text, all drawings | |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 March 2023** | **04 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

# EP 4 502 744 A1

## INTERNATIONAL SEARCH REPORT
### Information on patent family members

International application No.

**PCT/JP2023/006266**

| Patent document cited in search report | | | Publication date (day/month/year) | Patent family member(s) | Publication date (day/month/year) |
|---|---|---|---|---|---|
| JP | 2016-206784 | A | 08 December 2016 | (Family: none) | |
| JP | 2016-18526 | A | 01 February 2016 | (Family: none) | |
| JP | 2003-167623 | A | 13 June 2003 | (Family: none) | |
| JP | 2004-252875 | A | 09 September 2004 | (Family: none) | |
| JP | 2000-99130 | A | 07 April 2000 | (Family: none) | |
| WO | 2020/090770 | A1 | 07 May 2020 | US 2021/0397175 A1 entire text, all drawings EP 3876056 A1 CN 112955839 A | |

Form PCT/ISA/210 (patent family annex) (January 2015)

26

**EP 4 502 744 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6801131 B